**Europäisches Patentamt**

**European Patent Office**

**Office européen des brevets**

(19)

(11) Veröffentlichungsnummer: **0 091 089**
**B1**

(12)

# EUROPÄISCHE PATENTSCHRIFT

(45) Veröffentlichungstag der Patentschrift:
18.03.87

(21) Anmeldenummer: 83103182.8

(22) Anmeldetag: 30.03.83

(51) Int. Cl.⁴: **G 01 L 1/16, G 01 B 7/28**

(54) Drucksensor.

(30) Priorität: 05.04.82 DE 3212661

(43) Veröffentlichungstag der Anmeldung:
12.10.83 Patentblatt 83/41

(45) Bekanntmachung des Hinweises auf die Patenterteilung:
18.03.87 Patentblatt 87/12

(84) Benannte Vertragsstaaten:
DE FR GB IT

(56) Entgegenhaltungen:
FR-A-2 296 787
FR-A-2 485 229
US-A-4 206 648

(73) Patentinhaber: Siemens Aktiengesellschaft Berlin und München, Wittelsbacherplatz 2, D-8000 München 2 (DE)

(72) Erfinder: Diepers, Heinrich, Dr., Veit Stoss-Strasse 44, D-8552 Höchstadt (DE)
Erfinder: Schewe, Herbert, Dr., Haydnstrasse 58, D-8522 Herzogenaurach (DE)

EP 0 091 089 B1

LIBER, STOCKHOLM 1987

**Beschreibung**

Die Erfindung geht aus von einem Drucksensor zum Erkennen der Konturen und Gestalt von Werkstücken mit einem flachen Kunststoffkörper, dessen eine Flachseite mit einer Gruppe von streifenförmigen und wenigstens annähernd parallel zueinander angeordneten Zeilenelektroden versehen ist und an dessen anderer Flachseite eine Gruppe von streifenförmigen Spaltenelektroden angeordnet ist, die derart in einem vorbestimmten Winkel gegenüber den Zeilenelektroden versetzt sind, daß ihre Kreuzungspunkte ein Raster von Druckwandlern bilden, und die an wenigstens einer der Flachseiten von einem Elastomer abgedeckt sind.

Montageroboter benötigen bekanntlich eine Einrichtung, die dem Prozeßrechner die Daten für eine Werkstückerkennung liefert. Für solche Erkennungsaufgaben und zur Steuerung von Bewegungsvorgängen sind Sensorsysteme mit mechanisch fühlenden und abtastenden Aufnehmern, sogenannten taktilen Aufnehmern, geeignet. Das notwendige Fühlen und Tasten besteht im allgemeinen aus einer Aufeinanderfolge von weg- und kraftgebundenen Abläufen. Die Schwierigkeiten bei der Lösung taktiler Sensoraufgaben liegen in der Erstellung von Verarbeitungsalgorithmen sowie geeigneten konstruktiven Speziallösungen für die Aufnehmer. Werkstückkonturen können durch besonders ausgebildete Greifer ermittelt werden, die mit beweglichen Stiften versehen sind, mit deren Hilfe die Werkstückkontur abgebildet wird.

Ein bekannter taktiler Aufnehmer mit einem Raster von Druckwandlern enthält einen druckempfindlichen flachen Kunststoffkörper, dessen eine Flachseite mit einer Gruppe von streifenförmigen und wenigstens annähernd parallel zueinander angeordneten Zeilenelektroden und dessen andere Flachseite in gleicher Weise mit Spaltenelektroden versehen ist, die gegenüber den Zeilenelektroden in einem Winkel versetzt sind. Die Kreuzungspunkte bilden jeweils einen Druckwandler. Aus diesem Material mit druckabhängiger elektrischer Leitfähigkeit kann jedoch eine Detektormatte mit einem sehr geringen Rastermaß nicht hergestellt werden (US-Patent 4 208 648).

Es ist ferner ein Detektor mit wenigstens einer piezoelektrischen Folie aus Polyvinylidenfluorid PVDF bekannt, deren Flachseiten jeweils mit einer Elektrode versehen sind, an denen bei Druckeinwirkung und Biegung der Folie elektrische Ladungen gebildet werden, die an den Elektroden als elektrisches Signal abgenommen werden können (FR-A1 2 298 787).

Der Erfindung liegt nun die Aufgabe zugrunde, den bekannten Drucksensor mit einem Raster von Druckwandlern zu vereinfachen und zu verbessern, insbesondere soll eine Verkleinerung des Rastermaßes derart möglich sein, daß nicht nur die Konturen, sondern auch Gestaltungsmerkmale von Werkstücken mit sehr geringer Ausdehnung erkannt werden können.

Diese Aufgabe wird erfindungsgemäß gelöst mit den kennzeichnenden Merkmalen des Anspruchs 1. Der flache Piezokörper kann verhältnismäßig einfach mit Elektroden mit geringer Ausdehnung und geringem Abstand versehen werden, die ein Raster von piezoelektrischen Wandlerelementen bilden, deren Rastermaß wesentlich weniger als 1 mm betragen kann. Dieses Raster kann durch eine Elektronik abgetastet werden, die nicht nur Konturen, sondern auch weitere Gestaltungsmerkmale eines Werkstückes erkennen läßt.

In einer bevorzugten Ausführungsform des Drucksensors können die Elektroden wenigstens einer der Elektrodengruppen aus elektrisch leitfähigen Elastomeren bestehen, die dann sowohl zur Druckübertragung dienen als auch die Abführung der elektrischen Signale übernehmen.

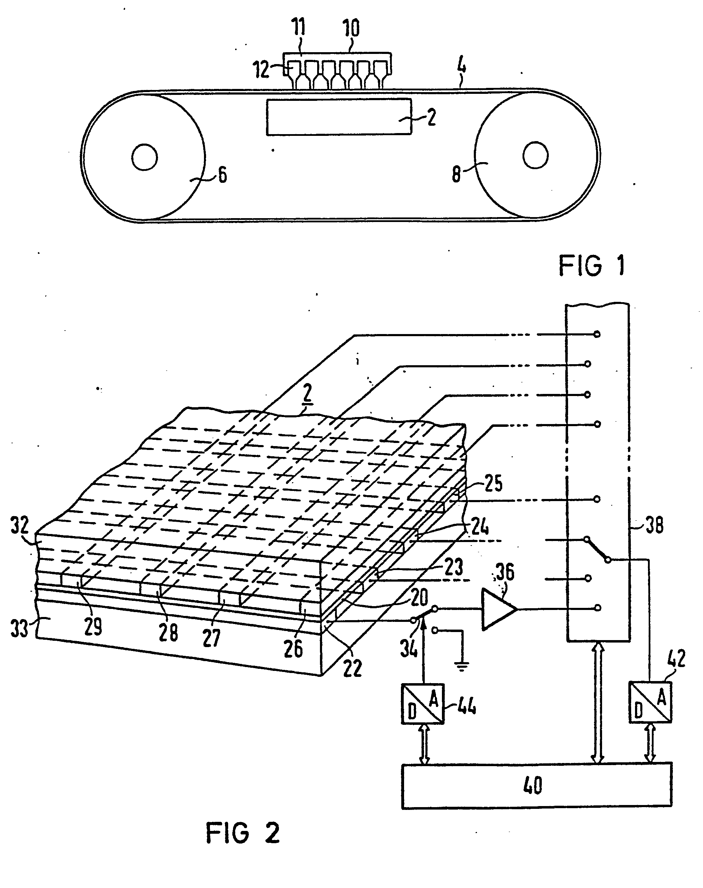

Zur weiteren Erläuterung der Erfindung wird auf die Zeichnung Bezug genommen, in deren Figur 1 die Anwendung des Erkennungssystems mit einem Drucksensor nach der Erfindung schematisch veranschaulicht ist. In Figur 2 ist eine besondere Ausführungsform des Sensors schematisch veranschaulicht.

In der Ausführungsform nach Figur 1 ist ein Drucksensor 2 unterhalb eines Transportbandes 4 angeordnet, das beispielsweise mit Hilfe von Transportwalzen bewegt werden kann, die in der Figur mit 6 bzw. 8 bezeichnet sind. Auf dem Transportband 4 soll beispielsweise ein Werkstück 10 transportiert werden, das beispielsweise ein integriertes Bauelement sein kann, dessen Gehäuse 11 integrierte Schaltkreise enthält, deren Anschlüsse 12 im rechten Winkel abgekröpft sind, so daß ihre Enden in der Ebene der Oberfläche des Transportbandes 4 liegen. Der sehr empfindliche Sensor 2 mit geringem Rastermaß ist somit in der Lage, die Anzahl und die Gestaltung der Anschlüsse 12 zu erkennen, wenn Sensor 2 und Werkstück 10 durch Relativbewegung einander soweit angenähert werden, daß die Enden der Anschlüsse 12 jeweils einen Druck auf die Oberfläche des Sensors 2 ausüben. Diese Druckeinwirkung kann auch dadurch verstärkt werden, daß die Luft zwischen dem Transportband 4 und der oberen Flachseite des Drucksensors 2 abgesaugt wird.

In der Ausführungsform nach Figur 2 enthält ein Sensor 2 einen flächen Piezokörper 20, der beispielsweise aus einer Folie aus Polyvinylidenfluorid PVDF mit einer Dicke von wenigen µm bestehen kann. Der Piezokörper 20 ist auf seiner unteren Flachseite mit streifenförmigen und parallel zueinander angeordneten Zeilenelektroden 22 bis 25 versehen, die beispielsweise aus Metall, vorzugsweise aus mehreren Metallschichten, bestehen, die in Dünnschichttechnik aufgebracht, insbesondere aufgedampft oder aufgesputtert, sind. Geeignet sind beispielsweise Metallelektroden 22 bis 25 aus Chrom und Gold mit einer Dicke von beispielsweise etwa 0,1 µm.

An der oberen Flachseite des Piezokörpers 20 sind Spaltenelektroden 26 bis 29 parallel zueinander und derart angeordnet, daß sie gegenüber den Zeilenelektroden 22 bis 26 einen rechten Winkel bilden. Wenigstens an einer der Flachseiten des Piezokörpers 20, vorzugsweise an beiden Flachseiten, ist jeweils eine Abdeckung 32 bzw. 33 vorgesehen. Die Kreuzungspunkte der Zeilenelektroden 22 bis 25 und der Spaltenelektroden 26 bis 29 bilden jeweils ein Wandlerelement. Mit einer Breite der Elektroden 22 bis 29 von beispielsweise etwa 0,2 mm und einem Abstand der Elektroden untereinander von beispielsweise etwa 0,35 mm entsteht ein Rastermaß der Druckwandler von 0,5 mm, so daß auf einem mm$^2$ der Oberfläche des Drucksensors 2 praktisch neun Wandlerelemente wirksam sind. Er ist somit in der Lage, die richtige Gestaltung der Enden der Anschlüsse 12 des Werkstücks 10 nach Figur 1, das beispielsweise eine Ausdehnung von nicht wesentlich mehr als etwa 10 mm haben kann, zu erkennen.

Zur Ermittlung der Gestaltungsmerkmale eines in Figur 2 nicht dargestellten Werkstücks werden die Druckwandler des gesamten Rasters nacheinander ausgelesen. Zu diesem Zweck sind die Zeilenelektroden 22 bis 25 und Spaltenelektroden 26 bis 29 jeweils über einen elektronischen Umschalter, die vorzugsweise Feldeffekttransistoren sein können und von denen in der Figur zur Vereinfachung nur einer dargestellt und mit 34 bezeichnet ist, in Reihe mit jeweils einem Verstärker 36 an einen Meßstellenumschalter 38 angeschlossen, der zur Abtastung der Zeilen- und Spaltenelektroden 22 bis 29 dient. Er wird von einem Rechner 40 gesteuert, der vorzugsweise ein Mikroprozessor sein kann.

Dem Rechner 40 werden die von den Zeilen- und Spaltenelektroden 22 bis 29 abgenommenen Signale über einen Analog-Digital-Wandler 42 zugeführt. In gleicher Weise erhalten die elektronischen Umschalter 34 ihre Steuerbefehle vom Rechner 40 über einen Digital-Analog-Wandler 44. Der Rechner 40 steuert über den Digital-Analog-Wandler 44 die elektronischen Umschalter 34 so, daß vor jeder Abtastung alle Wandlerelemente kurzgeschlossen sind, was in der Figur durch eine am Umschalter 34 dargestellte und nicht näher bezeichnete Erdungsklemme angedeutet ist. Durch diese Gestaltung wird erreicht, daß nur Belastungsänderungen durch die Elektronik registriert und zugleich statische Aufladungen verhindert werden. Im allgemeinen verhältnismäßig langsam verlaufende Temperaturänderungen können somit nicht zu einer Signalbildung führen.

In einer bevorzugten Ausführungsform des Sensors 2 können die Zeilenelektroden 22 bis 25 und auch die Spaltenelektroden 26 bis 29 jeweils aus elektrisch leitfähigen Elastomeren gebildet sein. Unter Umständen kann es zweckmäßig sein, die Dicke der Elektroden in dieser Ausführungsform so zu wählen, daß zwischen den Flachseiten des Piezokörpers 20 und der ihnen zugewandten Oberfläche der Abdeckungen 32 und 33 zwischen einander benachbarten Elektroden jeweils ein Hohlraum gebildet wird, der für die Druckübertragung auf den Piezokörper 20 unwirksam ist. Durch diese relative Verminderung der Elektrodenfläche gegenüber der Fläche des Piezokörpers 20 wird der pyrolytische Effekt vermindert, während der piezoelektrische Effekt erhalten bleibt.

## Patentansprüche

1. Drucksensor zum Erkennen der Konturen und Gestalt von Werkstücken (10) einem flachen Kunststoffkörper, dessen eine Flachseite mit einer Gruppe von streifenförmigen und wenigstens annähernd parallel zueinander angeordneten Zeilenelektroden (22 bis 25) versehen ist und an dessen anderer Flachseite eine Gruppe von streifenförmigen Spaltenelektroden (26 bis 29) angeordnet ist, die derart in einem vorbestimmten Winkel gegenüber den Zeilenelektroden (22 bis 25) versetzt sind, daß ihre Kreuzungspunkte ein Raster von Druckwandlern bilden, und die an wenigstens einer der Flachseiten von einem Elastomer (32, 33) abgedeckt sind, dadurch gekennzeichnet, daß als Kunststoffkörper ein Piezokörper (20) aus Polyvinylidenfluorid PVDF mit einer Dicke von wenigen μm vorgesehen ist.

2. Sensor nach Anspruch 1, dadurch gekennzeichnet, daß die Elektroden wenigstens einer der Elektrodengruppen (22 bis 25; 26 bis 29) aus elektrisch leitfähigen Elastomeren bestehen, deren Dicke so gewählt ist, daß zwischen benachbarten Elektroden jeweils ein Hohlraum entsteht.

## Claims

1. A pressure sensor for recognizing the contours and shape of workpieces (10) comprising a planar body of synthetic material, one of whose flat sides is provided with a group of elongate strip-shaped electrodes (22 to 25) which are at least approximately parallel to one another, and on whose other flat side is arranged a group of strip-shaped column electrodes (26 to 29) which are offset in relation to the row electrodes (22 to 25) at a predetermined angle in such a manner that their intersections form a raster of pressure transformers, and which are covered by an elastomer (32, 33) on at least one of the flat sides, characterised in that a piezo-body (20), which consists of polyvinylidenfluoride PVDF and has a thickness of a few μm, is provided as a synthetic body.

2. A pressure sensor as claimed in Claim 1, characterised in that the electrodes of at least one of the electrode groups (22 to 25; 26 to 29) consist of electrically conductive elastomers, whose thickness is selected to be such that a cavity is respectively formed between adjacent electrodes.

## Revendications

1. Capteur de pression pour reconnaître les contours et la configuration de pièces (10), comprenant un corps plat en matière synthétique, dont une face plane est pourvue d'un groupe d'électrodes de lignes (22 à 25) ayant la forme de rubans et s'étendant au moins à peu près parallèlement, et sur l'autre face plane duquel est disposé un groupe d'électrodes de colonnes (26 à 29) en forme de rubans, qui sont décalées d'un angle prédéterminé par rapport aux électrodes de lignes (22 à 25), de manière que leurs points de croisement forment un réseau de transducteurs de pression, et qui sont recouvertes par un élastomère (32,33) sur au moins l'une des faces planes, caractérisé en ce que le corps de matière synthétique est un corps piézoélectrique (20) en fluorure de polyninylidène PVDF d'une épaisseur de quelques μm.

2. Capteur selon la revendication 1, caractérisé en ce que les électrodes d'au moins l'un des groupes d'électrodes (22 à 25; 26 à 29) sont formées d'élastomères électriquement conducteurs dont l'épaisseur est choisie de manière qu'un vide soit formé entre des électrodes voisines.

FIG 1

FIG 2